# EUROPÄISCHE PATENTANMELDUNG

(11) **EP 1 571 362 A1**
(43) Veröffentlichungstag der Anmeldung: **07.09.2005**
(21) Anmeldenummer: 05003356.2
(22) Anmeldetag: 17.02.2005
(51) Int. Cl.: F16D 48/06

(54) **Verfahren zur Tastpunktermittlung bei der Erst- oder Wiederinbetriebnahme der Kupplung eines automatisierten Getriebes und System hierzu**

(30) Priorität: 03.03.2004 DE 102004010264
(71) Anmelder: LuK Lamellen und Kupplungsbau Beteiligungs KG, 77815 Bühl (DE)
(72) Erfinder: Renk, Hans-Jürgen, 77839 Lichtenau (DE); Schmitt, Werner, 76547 Sinzheim (DE); Henneberger, Klaus Dr., 77815 Bühl (DE)

(57) **Zusammenfassung**

Es wird ein Verfahren vorgeschlagen zur Tastpunktermittlung bei der Erst- oder Wiederinbetriebnahme der Kupplung eines automatisierten Getriebes mit einer Getriebesteuerung und einer Auslösevorrichtung sowie einem die Getriebesteuerung ansteuernden Wählhebel, bei dem mittels einer Betätigung des Wählhebels die Getriebesteuerung zum Einlegen einer Fahrstufe angesteuert wird und die Tastpunktermittlung an der Auslösevorrichtung eingeleitet und dann von der Auslösevorrichtung und der Getriebesteuerung autark ausgeführt wird.

## Beschreibung

Die vorliegende Erfindung betrifft ein Verfahren zur Tastpunktermittlung bei der Erst- oder Wiederinbetriebnahme der Kupplung eines automatisierten Getriebes mit einer Getriebesteuerung und einer Auslösevorrichtung sowie einem die Getriebesteuerung ansteuernden Wählhebel und ein System zur Durchführung des Verfahrens.

Bei dem vorstehend genannten automatisierten Getriebe kann es sich beispielsweise um ein automatisiertes Schaltgetriebe handeln. Wenn die Motor- und Getriebeeinheit mit einem solchen automatisierten Getriebe bei der Montage eines Fahrzeugs eingebaut worden ist, wird das Fahrzeug spätestens bei der Endabnahme schon aus eigener Kraft bewegt, d.h. unter Zuhilfenahme der Motor- und Getriebeeinheit.

Bevor das Fahrzeug allerdings aus eigener Kraft fahren kann, d.h. über die Kupplung Abtriebsmoment des Motors in das Getriebe eingeleitet werden kann, muss eine erste Tastpunktermittlung der Kupplung durchgeführt werden. Eine ähnliche Tastpunktermittlung muss auch bei der Wiederinbetriebnahme des Fahrzeugs nach Reparaturarbeiten durchgeführt werden, die dazu geführt haben, dass kein Tastpunkt mehr zur Verfügung steht, da anderenfalls ein ungewolltes Losfahren des Fahrzeugs nicht ausgeschlossen werden kann.

Zu diesem Zweck wurde bisher von einem Verfahren Gebrauch gemacht, bei dem eine Bedienperson, also beispielsweise ein Werker beim Fahrzeughersteller oder in der Reparaturwerkstatt von einem Diagnosegerät aufgefordert wurde, bestimmte Arbeitsschritte in einer festgelegten Reihenfolge durchzuführen.

Diese von der Bedienperson durchzuführenden Arbeitsschritte bestanden in der mehrfachen Betätigung eines Wählhebels und des Diagnosegeräts.

Da für die einzelnen von der Bedienperson vorzunehmenden Handlungen bestimmte Zeitfenster einzuhalten sind, hat die Praxis gezeigt, dass diese Einhaltung der Zeitfenster durch die Bedienperson gelegentlich nicht stattfindet, so dass das Diagnosegerät die Tastpunktermittlung bei der Erst- oder Wiederinbetriebnahme abbricht und die Verfahrensschritte zur Tastpunktermittlung wieder von vorne durchgeführt werden müssen.

Diese Schilderung macht deutlich, dass ein abgebrochener Verfahrensablauf zu Verzögerungen führt und darüber hinaus die Fehlerhäufigkeit bei der Durchführung einzelner Verfahrensschritte durch die Bedienperson ansteigt.

Aus der EP 0 691 906 B1 ist ein Verfahren bekannt für die Kalibrierung eines Kupplungssteuersystems, welches eine Mehrzahl vom Fahrer auszulösender Betätigungen umfasst und mit der unter anderem ein zulässiger Leerlaufstellungsbereich des Schalt- oder Wählhebels erfasst wird und unter anderem auch die Drosselklappenstellung des Fahrzeugs im betätigten und unbetätigten Zustand und darüber hinaus auch der Schalthebel aus der Leerlaufstellung heraus in jede mögliche Gangschaltstellung bewegt wird.

Nachdem die Erfahrung zeigt, dass die Fehlerhäufigkeit mit zunehmender Zahl der von der Bedienperson vorzunehmenden Handlungen steigt, liegt der vorliegenden Erfindung nunmehr die Aufgabe zugrunde, ein Verfahren zur Tastpunktermittlung bei der Erst- oder Wiederinbetriebnahme der Kupplung eines automatisierten Getriebes zu schaffen, das die Zahl der von der Bedienperson vorzunehmenden Handlungen deutlich verringert.

Ausgehend hiervon schafft die Erfindung zur Lösung dieser Aufgabe nunmehr ein Verfahren zur Tastpunktermittlung bei der Erst- oder Wiederinbetriebnahme der Kupplung eines automatisierten Getriebes mit einer Getriebesteuerung und einer Auslösevorrichtung sowie einem die Getriebesteuerung ansteuernden Wählhebel, bei dem mittels einer Betätigung des Wählhebels die Getriebesteuerung zum Einlegen einer Fahrstufe angesteuert wird und die Tastpunktermittlung an der Auslösevorrichtung eingeleitet und dann von der Auslösevorrichtung und der Getriebesteuerung autark ausgeführt wird.

Es bedeutet dies mit anderen Worten, dass es nach dem erfindungsgemäßen Verfahren nur mehr erforderlich ist, dass die Bedienperson den Wählhebel so betätigt, dass die Getriebesteuerung zum Einlegen einer Fahrstufe angesteuert wird und dann die Bedienperson in einem zweiten Arbeitsschritt die Tastpunktermittlung an der Auslösevorrichtung, die beispielsweise ein Diagnosegerät sein kann, einleitet, woraufhin dann die Tastpunktermittlung durch die Auslösevorrichtung und die Getriebesteuerung autark durchgeführt wird, ohne dass hierzu die Bedienperson nochmals bis zum Abschluss der Tastpunktermittlung eingreifen muss.

Damit ist die Zahl der von der Bedienperson vorzunehmenden Handlungen bis zum Abschluss der Tastpunktermittlung auf zwei Handlungen reduziert, nämlich erstens der Betätigung des Wählhebels so, dass die Getriebesteuerung das Einlegen einer Fahrstufe auslöst und zweitens die Bedienperson dann die Tastpunktermittlung einleitet, indem sie die Auslösevorrichtung betätigt, die dann in Zusammenarbeit mit der Getriebesteuerung die darauf ablaufende Tastpunktermittlung bei der Erst- oder Wiederinbetriebnahme autark durchführt.

Für den Fall, dass eine hydraulische Kraftübertragungsstrecke zur Ansteuerung der automatisierten Kupplung und/oder des automatisierten Getriebes zum Einsatz kommt, ist es nach der Erfindung vorgesehen, dass die Getriebesteuerung von der Auslösevorrichtung zum Auslegen der Fahrstufe und zum Durchführen eines Volumenausgleichs der hydraulischen Kraftübertragungsstrecke angesteuert wird.

In einem nächsten Schritt ist es nach dem erfindungsgemäßen Verfahren vorgesehen, dass die Getriebesteuerung nach der Durchführung des Volumenausgleichs von der Auslösevorrichtung zum Einlegen einer Fahrstufe (der Volumenausgleich ist bereits abgeschlossen) angesteuert wird und sodann die Tastpunktermittlung durch die Auslösevorrichtung in Zusammenarbeit mit der Getriebesteuerung durchgeführt wird.

Nach Abschluss der Tastpunktermittlung kann nach einer Weiterbildung der Erfindung noch vorgesehen sein, dass die durchgeführte Tastpunktermittlung an der Auslösevorrichtung von der Bedienperson bestätigt wird, wobei dies beispielsweise dem Zweck dienen kann, dass der Auslösevorrichtung, bei der es sich um ein Diagnosegerät handeln kann, durch diese Eingabe der Bedienperson mitgeteilt wird, dass diese von dem Abschluss der Tastpunktermittlung Kenntnis erlangt hat.

Schließlich ist nach der Erfindung auch ein System zur Durchführung des Verfahrens zur Tastpunktermittlung bei der Erst- oder Wiederinbetriebnahme der Kupplung eines automatisierten Getriebes vorgesehen und zwar mit einem automatisierten Getriebe, einer Getriebesteuerung, einer Auslösevorrichtung und einem Wählhebel, welches sich dadurch auszeichnet, dass die Getriebesteuerung zur autarken Durchführung der Tastpunktermittlung in Verbindung mit der Auslösevorrichtung ausgebildet ist. Diese Ausbildung weist den Vorteil auf, dass Eingriffsmaßnahmen der Bedienperson in die Tastpunktermittlung nach dem Anstoßen der Tastpunktermittlung nicht mehr erforderlich sind, da die Tastpunktermittlung durch die Getriebesteuerung in Zusammenarbeit mit der Auslösevorrichtung selbsttätig durchgeführt wird.

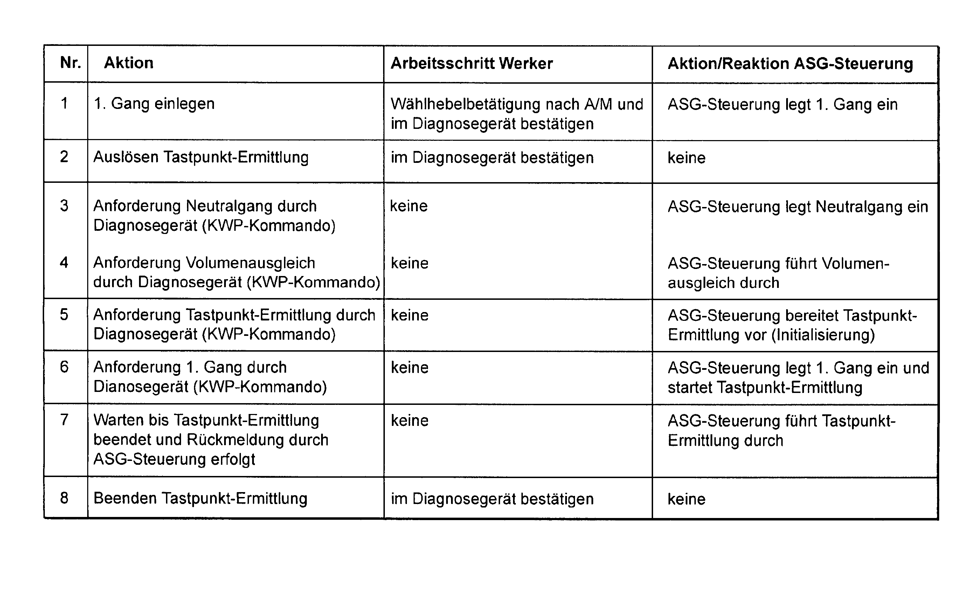

Die Erfindung wird im Folgenden anhand der Zeichnung näher erläutert, die in der einzigen Abbildung ein schematisches Ablaufdiagramm der einzelnen Verfahrensschritte zur Tastpunktermittlung bei der Erst- oder Wiederinbetriebnahme der Kupplung eines automatisierten Getriebes zeigt.

Obwohl nachfolgend bei der eingelegten Fahrstufe von dem ersten Gang eines automatisierten Getriebes und von einer Wählhebelbetätigung in eine Stellung A/M für einen automatischen oder manuellen Modus ausgegangen wird, wird hierunter auch jede andere Vorwärts- oder Rückwärtsfahrstufe des Getriebes verstanden und jede andere Wählhebelstellung, die dazu führt, dass ein Vorwärtsfahrgang oder ein Rückwärtsfahrgang des automatisierten Getriebes eingelegt wird.

In einem ersten Schritt S1 wird also der erste Gang eingelegt und hierzu vom Werker eine Betätigung des Wählhebels in die Stellung A/M herbeigeführt, wobei dies optional - nicht aber notwendigerweise - auch noch durch eine Bestätigung dieses Vorgangs durch den Werker am Diagnosegerät quittiert werden kann. Als Reaktion hierauf legt die Steuerung des automatisierten Schaltgetriebes, im Folgenden als ASG-Steuerung bezeichnet, den ersten Gang ein.

In einem zweiten Schritt S2 wird die Tastpunktermittlung ausgelöst und hierzu eine Bestätigung vom Werker am Diagnosegerät durchgeführt.

In einem nächsten Schritt S3 wird vom Diagnosegerät an die ASG-Steuerung eine Anweisung ausgegeben, den eingelegten ersten Gang auszulegen und das Getriebe in Neutralgangstellung zu bringen.

Darauf folgt in einem nächsten Schritt S4 die Ausgabe einer Anweisung vom Diagnosegerät an die ASG-Steuerung, den Volumenausgleich der hydraulischen Kraftübertragsstrecke durchzuführen.

Nach Abschluss des Volumenausgleichs wird in einem nächsten Schritt S5 vom Diagnosegerät an die ASG-Steuerung eine Anweisung ausgegeben, die Tastpunktermittlung einzuleiten, die Tastpunktermittlung wird initialisiert.

Daraufhin wird in einem nächsten Schritt S6 von dem Diagnosegerät an die ASG-Steuerung eine Anweisung ausgegeben, den ersten Gang einzulegen, woraufhin die ASG-Steuerung den ersten Gang einlegt und die Tastpunktermittlung durchführt.

Während der Tastpunktermittlung wartet das Diagnosegerät in einem nächsten Schritt S7 bis eine Rückmeldung über den Vollzug der Tastpunktermittlung von der ASG-Steuerung an das Diagnosegerät erfolgt. Daraufhin gibt das Diagnosegerät in einem weiteren Schritt S8 eine Nachricht in der Form beispielsweise einer lesbaren Anweisung und/oder eines Signaltons an den Werker aus, dass die Tastpunktermittlung beendet wurde. Diese Signalausgabe wird vom Werker am Diagnosegerät bestätigt, womit er anzeigt, dass er vom Abschluss der Tastpunktermittlung Kenntnis genommen hat.

Die vorstehende Erläuterung macht deutlich, dass die von der Bedienperson vorzunehmenden Handlungen bei der Tastpunktermittlung bei der Erst- oder Wiederinbetriebnahme der Kupplung eines automatisierten Getriebes nach der vorliegenden Erfindung weitgehend minimiert wurden und die Tastpunktermittlung vom Diagnosegerät und der Getriebesteuerung, nachdem der Ablauf angestoßen wurde, autark durchgeführt wird und damit die Möglichkeit von Fehlbedienungen durch die Bedienperson bei der Tastpunktermittlung weitgehend ausgeschlossen worden sind.

Nach dem vorstehend aufgeführten bekannten Verfahren wurde vor Beginn der Tastpunktermittlung durch die Bedienperson der Wählhebel in eine Neutralstellung verbracht, woraufhin die Getriebesteuerung das Getriebe in eine Neutralstellung versetzt hat. Während des gesamten bekannten Verfahrens zur Tastpunktermittlung bei der Erst- oder Wiederinbetriebnahme verblieb der Wählhebel in der Neutralstellung, obwohl zur Tastpunktermittlung von der Getriebesteuerung auch eine Fahrstufe eingelegt werden musste, so dass zwischen der tatsächlichen Getriebestellung und der von der Bedienperson wahrzunehmenden Getriebestellung in der Form der Wählhebelstellung eine Diskrepanz vorlag.

Nach dem erfindungsgemäßen Verfahren befindet sich der Wählhebel während der gesamten Tastpunktermittlung in einer Fahrstellung, so dass diese von der Bedienperson visuell wahrzunehmende Stellung des Wählhebels von diesem als Fahrstellung wahrgenommen wird, und dadurch seine Aufmerksamkeit erhöht wird, und er beispielsweise zusätzlich die Betriebsbremse des Fahrzeugs betätigt. Bei solchermaßen betätigter Betriebsbremse des Fahrzeugs ist das während der Tastpunktermittlung erforderliche Einlegen eines Fahrgangs durch die Getriebesteuerung unkritisch, so dass es nicht mehr zu der nach dem bekannten Verfahren für die Bedienperson sichtbaren Diskrepanz zwischen der Wählhebelstellung und der Getriebestellung kommt.

Hinsichtlich vorstehend im Einzelnen nicht näher erläuterter Merkmale der Erfindung wird im Übrigen ausdrücklich auf die Ansprüche und die Zeichnung verwiesen.

## Patentansprüche

1. Verfahren zur Tastpunktermittlung bei der Erst- oder Wiederinbetriebnahme der Kupplung eines automatisierten Getriebes mit einer Getriebesteuerung und einer Auslösevorrichtung sowie einem die Getriebesteuerung ansteuernden Wählhebel, **dadurch gekennzeichnet, dass** mittels einer Betätigung des Wählhebels die Getriebesteuerung zum Einlegen einer Fahrstufe angesteuert wird und die Tastpunktermittlung an der Auslösevorrichtung eingeleitet und dann von der Auslösevorrichtung und der Getriebesteuerung autark ausgeführt wird.

2. Verfahren nach Anspruch 1, **dadurch gekennzeichnet, dass** die Getriebesteuerung von der Auslösevorrichtung zum Auslegen der Fahrstufe und zum Durchführen eines Volumenausgleichs einer hydraulischen Kraftübertragungsstrecke ansteuert wird.

3. Verfahren nach Anspruch 2, **dadurch gekennzeichnet, dass** die Getriebesteuerung nach der Durchführung des Volumenausgleichs von der Auslösevorrichtung zum Einlegen einer Fahrstufe angesteuert wird und die Tastpunktermittlung durchgeführt wird.

4. Verfahren nach einem der Ansprüche 1 bis 3, **dadurch gekennzeichnet, dass** die durchgeführte Tastpunkermittlung an der Auslösevorrichtung bestätigt wird.

5. System zur Durchführung des Verfahrens nach einem der vorstehenden Ansprüche mit einem automatisierten Getriebe, einer Getriebesteuerung, einer Auslösevorrichtung und einem Wählhebel, **dadurch gekennzeichnet, dass** die Getriebesteuerung zur autarken Durchführung der Tastpunktermittlung in Verbindung mit der Auslösevorrichtung ausgebildet ist.
